# EUROPEAN PATENT SPECIFICATION

(11) **EP 1 273 014 B1**
(45) Date of publication and mention of the grant of the patent: **09.05.2007**
(21) Application number: 01936075.9
(22) Date of filing: 14.03.2001
(51) Int. Cl.: H01B 7/295, C08K 3/02, C08K 3/22, C08K 5/11

(54) **SELF-EXTINGUISHING CABLE AND FIRE RETARDANT COMPOSITION USED THEREIN**
SELBSTLÖSCHENDES ELEKTRISCHES KABEL UND FLAMMWIDRIGE ZUSAMMENSETZUNG
CABLES AUTOEXTINGUIBLES ET COMPOSITIONS IGNIFUGES ENTRANT DANS LEUR COMPOSITION

(30) Priority: 30.03.2000 EP 00106800; 04.04.2000 US 194395 P
(43) Date of publication of application: 08.01.2003
(73) Proprietor: Prysmian Cavi e Sistemi Energia S.r.l., 20126 Milano (IT)
(72) Inventor: SCELZA, Cristiana, I-84044 Angellara di Vallo della Lucania (IT); ZAOPO, Antonio, I-20137 Milano (IT)
(74) Representative: Mancini, Vincenzo
(86) International application number: PCT/EP2001/002899
(87) International publication number: WO 2001/075907

(56) References cited:
- WO-A-85/05626
- WO-A-92/20731
- DATABASE WPI Section Ch, Week 199046 Derwent Publications Ltd., London, GB; Class A17, AN 1990-344034 XP002145848 & JP 02 247244 A (IDEMITSU PETROCHEM CO), 3 October 1990 (1990-10-03)
- PATENT ABSTRACTS OF JAPAN vol. 014, no. 261 (C-0725), 6 June 1990 (1990-06-06) & JP 02 075642 A (FUJIKURA LTD), 15 March 1990 (1990-03-15)

## Description

The present invention relates to a self-extinguishing cable and to a fire retardant composition used therein.

Particularly, the invention describes a self-extinguishing cable comprising at least a conductor and at least a conductor-coating layer comprising a fire retardant composition suitable to provide the cable with self-extinguishing properties.

The improvement of the characteristics of flame retardant materials is continuously demanded by skilled persons in numerous fields. In particular, there have been prepared materials which, added to organic substances, specifically to *per se* combustible plastic materials, are suitable to prevent or at least to delay the combustion events, especially the flame propagation when these organic substances are subject either to such high temperatures as to cause their combustion or to the direct action of the flame.

A first solution proposed with the aim of reducing the flame propagation is to add the plastic material with halogenated organic compounds, particularly chlorinated and/or brominated organic compounds, possibly in admixture with antimony oxides, as flame retardant agents. It is believed that such halogenated compounds carry out their action by affecting the radical mechanisms occurring in the gaseous phase during the combustion. Although the resulting compositions show good flame retardant properties, the halogenated flame retardant agents exhibit a number of drawbacks since they partially decompose during the processing of the polymer composition, producing halogenated gases which are toxic for workers and corrosive for the metal parts of the machine tools. Moreover, when they are subject to the direct action of the flame, their combustion produces huge quantities of fumes containing toxic gases. Similar inconvenients are noticed when polyvinylchloride (PVC) added with antimony trioxide as a polymer base is used.

Inorganic charges free from halogens having flame retardant properties, such as metal hydrated oxides or hydroxides, particularly aluminium or magnesium hydroxide, are also known. At high temperatures, these products undergo an endothermic decomposition process which generates water, thus depriving the substrate from the heat and, therefore, slowing the pyrolysis reactions of the plastic material. Nevertheless, such inorganic agents fulfil their task only if they are present in remarkable amounts (generally at least 70-120 parts by weight calculated on 100 parts by weight of the base polymer), though to the detriment of the mechanical properties of the flame retardant composition. Particularly, the values of the elongation and stress at break result sensibly lowered in comparison with the polymer material per se.

Further, other fire retardant systems free from halogens, commonly known as "intumescent systems", have been developed, which, added to a plastic material, are suitable to cause, when combustion occurs, the expansion of the material itself and, at the same time, the formation of an expanded charcoal layer ("char") which prevents oxygen from passing from the outside to the inside, thereby blocking the combustion process for lack of comburent. Besides, the expansion of the plastic material, causing a volume increase, is believed to reduce the emission of flammable gases deriving from the decomposition of the organic substances and, at the same time, to protect the plastic material from the strong thermal irradiation coming from the zone of combustion.

Intumescent systems generally consist of a foaming agent and a dehydrating agent; optionally in the presence of a carbonization agent.

Usually, the foaming agent is a nitrogen compound, for instance urea or melamine, which develops non-flammable gases (particularly nitrogen) and contributes to the formation of char.

The dehydrating agent takes the water away from the substrate under combustion, making the carbonisation thereof easier, and generally consists of phosphorated compounds, for instance ammonium polyphosphates or melamine sulphates or phosphates.

The optionally present carbonization agent substantially contributes to the char formation and usually consists of polyhydroxylated organic substances such as sugars.

Patent application EP-A-0629677 discloses flame retardant compositions free from halogens comprising, in addition to an intumescent system having the characteristics already described, an aluminosilicate, particularly a zeolite.

Also patent application WO 95/16736 discloses compositions comprising a flame retardant substantially free from halogens and wherein the polymer base component consists of styrene polymers substantially free from oxygen. The flame retardant comprises at least one of the following additives: red phosphorus, ammonium polyphosphate, melamine phosphate, pyrophosphate or cyanurate, or resorcinol bis(diphenylphosphate), magnesium hydroxide and a thermoplastic elastomer.

US 5698323 describes a further intumescent system free from halogens and antimony, used for making energy or telecommunication cables, which comprises magnesium hydroxide or alumina trihydrate, zinc oxide and red phosphorus; the polymer base component consists of ethylene copolymers with acryl or vinyl esters.

On the basis of the Applicant's experience, the known fire retardant systems show a decreased self-extinguishing ability, when the combustion is repeated. In other words, the efficacy of fire retardant systems tends to be exhausted after the temperature increase caused by the first application of the flame. In fact, such temperature increase can reduce the sample's abilities of self-extinguishing to such an extent as to make the sample combustible again, with obvious undesirable drawbacks.

The technical problem of obtaining a cable endowed with good self-extinguishing properties, also after repeated combustions, without impairing the mechanical properties of the cable, remains therefore still unsolved.

The Applicant has unexpectedly found that the aforesaid technical problem can be solved by using, for at least one of the conductor-coating layer of the cable, a flame retardant composition comprising a polymer base material in admixture with melamine or a derivative thereof, red phosphorus, magnesium and/or aluminium hydroxyde and a zeolite, in predetermined amounts.

Particularly, the Applicant has found that the self-extinguishing ability of a cable comprising such a fire retardant composition, also upon repeated combustions, turns out to be improved without impairing the mechanical properties of the cable.

The practical importance of the resistance of a cable endowed with such characteristics, i.e. able to resist to subsequent combustions, is apparent in real fire conditions.

In fact, the cable is generally located in an environment wherein it is in contact with other combustible objects, such as plastic raceways, panels, cables of different nature, as well as other objects having self-extinguishing characteristics which can be different from the ones of the cable.

It can therefore happen that the cable endowed with self-extinguishing properties becomes self-extinguished after the first ignition and that, however, being in contact with other objects which are still under combustion, it is found in such conditions that it must be re-ignited. This can be repeated more times and it is therefore apparent that a peculiar system able to self-extinguish after subsequent ignitions has a remarkable practical importance.

According to a first aspect, therefore, the invention concerns a self-extinguishing cable comprising at least one conductor and at least a coating layer comprising a fire retardant composition comprising:
(a) a polymer base material;
(b) melamine or a derivative thereof, in amounts equal to 5-50 parts by weight;
(c) red phosphorus, in amounts equal to 5-50 parts by weight;
(d) magnesium and/or aluminium hydroxide or hydrated oxide, in amounts equal to 10-150 parts by weight;
(e) a zeolite in amounts equal to 1-5 parts by weight;
said amounts being referred to 100 parts by weight of component (a).

Preferably, the polymer base material (a) can be selected from: polyolefins, copolymers of different olefins, copolymers of olefins with esters having ethylene insaturation, polyesters, polyethers, copolymers polyether/polyester, and mixtures thereof.

Examples of such polymers are: high density polyethylene (HDPE) (d=0.940-0.970 g/cm³), medium density polyethylene (MDPE) (d=0.926-0.940 g/cm³), low density polyethylene (LDPE) (d=0.910-0.926 g/cm³); copolymers of ethylene with alpha-olefins having from 3 to 12 carbon atoms (for instance 1-butene, 1-hexene, 1-octene and the like), particularly linear low density polyethylene (LLDPE) and ultra low density polyethylene (ULDPE) (d=0.860-0.910 g/cm³); polypropylene (PP); thermoplastic copolymers of propylene with another olefin, particularly ethylene; copolymers of ethylene with at least an ester selected from alkylacrylates, alkylmetacrylates and vinylcarboxylates, wherein the alkyl group, whether linear or branched, may have from 1 to 8, preferably from 1 to 4, carbon atoms, whereas the carboxyl group, whether linear or branched, may have from 2 to 8, preferably from 2 to 5, carbon atoms, particularly copolymers ethylene/vinylacetate (EVA), ethylene/ethylacrylate (EEA), ethylene/butylacrylate (EBA); elastomeric copolymers ethylene/alpha-olefins, particularly elastomeric copolymers ethylene/propylene (EPR) or ethylene/propylene/diene (EPDM); and mixtures thereof.

Melamine derivatives suitable for implementing the invention can be selected from the inorganic and organic derivatives commonly used in the art such as, for instance, guanamines or melamine phosphates (phosphate, pyrophosphate, etc.), borate, sulphate, cyanurate.

In this description "zeolite" is meant to indicate a natural or synthetic hydrated aluminosilicate having an open tridimensional crystal structure, wherein water molecules reversibly insert.

Particularly, zeolites can be represented by the following formula:

M_{x/n} [(AlO₂)ₓ,(SiO₂)_{y}]·wH₂O

wherein
M represents an alkali or earth-alkali metal cation, tetralkylammonium, preferably sodium or calcium;
x, y and w are integer numbers, the y/x ratio being a number greater than or equal to 1;
n is the cation valence, preferably 1 or 2.

According to a preferred aspect, the cable of the invention has amounts of components (b), (c), (d) and (e), always referred to 100 parts by weight of component, (a), of 10-30, 10-30, 20-100 and 1,5-3 parts by weight, respectively.

According to another aspect, the invention further concerns a fire retardant composition comprising:
(a) a polymer base material;
(b) melamine or a derivative thereof, in amounts equal to 5-50 parts by weight;
(c) red phosphorus, in amounts equal to 5-50 parts by weight;
(d) magnesium and/or aluminium hydroxide or hydrated oxide, in amounts equal to 10-150 parts by weight;
(e) a zeolite in amounts equal to 1-5 parts by weight;
said amounts being referred to 100 parts by weight of component (a).

The fire retardant composition according to the invention can be prepared by mixing the polymer components with additives according to techniques known in the art. The mixing can be carried out, for instance, by an internal mixer of the tangential (Banbury) or copenetrating rotor type, or by continuous mixers of the Ko-Kneader (Buss) type or of the co-rotating or counter-rotating double-screw type. The flame retardant compositions of the invention are preferably used in a non cross-linked form aiming at obtaining a coating having thermoplastic properties and therefore recyclable. It is also possible to carry out a total or partial cross-linking of the compositions of the invention according to known techniques, particularly by adding a radical initiator, for instance an organic peroxide.

The compositions of the invention can be used therefore to directly coat a conductor, or to make an external sheath on the conductor previously coated with at least an insulating layer. The coating step can be carried out for instance by extrusion. In case at least two layers are present, the extrusion can be carried out in several separate steps, for instance by extruding, in a first step, the internal layer on the conductor and, in a second step, the external layer on the internal one. Advantageously, the coating process can be made in one step, for instance by the "tandem" technique, wherein different single extruders, arranged in series, are used, or by co-extrusion with a single multiple extruding head.

Further particulars will be set forth in the following detailed description, taking by reference the accompanying drawings, in which:
1.Figure 1 is a cross-section of a low voltage cable of the unipolar type according to the invention;
2.Figure 2 is a cross-section of another low voltage cable of the unipolar type according to the invention;
3. Figure 3 is a cross-section of a low voltage cable of the tripolar type according to the invention.

"Low voltage" generally means a voltage lower than 5 kV, preferably lower than 2 kV, more preferably lower than 1 kV.

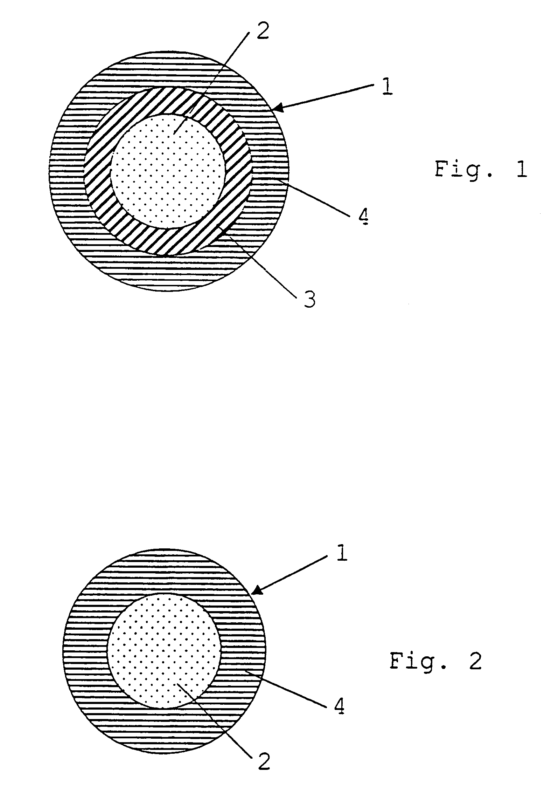

With reference to Figure 1, a self-extinguishing cable (1) of the unipolar type, in particular for low voltage electric energy distribution, comprises: a conductor (2), an inner layer having electric insulating function (3) and an outer layer (4) having the function of a protective sheath with flame retardant properties consisting of the composition according to the present invention.

The inner layer (3) can be made of a polymer material, either cross-linked or non cross-linked, preferably free from halogens, having common electric isolation properties. The polymer material can be selected, for instance, from: polyolefins, (omopolymers or copolymers of different olefins), copolymers olefins/ethylene insaturated esters, polyesters, polyethers, copolymers polyethers/polyesters, and mixtures thereof. Examples of such polymers are: polyethylene (PE), particularly linear low density PE (LLDPE); polypropylene (PP); thermoplastic copolymers propylene/ethylene; elastomeric copolymers ethylene-propylene (EPR) or ethylene-propylene-diene (EPDM); copolymers ethylene/vinylacetate (EVA); copolymers ethylene/ methylacrylate (EMA); copolymers ethylene/ ethylacrylate (EEA); copolymers ethylene/butyl-acrylate (EBA); copolymers ethylene/alpha-olefin, and the like.

Alternatively, referring to Figure 2, a self-extinguishing cable (1) of the unipolar type, particularly for the distribution of low voltage electric energy, can be made of a conductor (2) directly coated with the anti-flame composition above described so as to form an outer layer (4) having flame retardant properties, without interposing other insulating layers. In this way, the outer layer (4) works also as electric insulation layer.

A thin polymer layer (not shown in the figures) having an antiabrasive function may also be externally applied.

A pigment may be added to the material forming the outer layer (4) or the antiabrasive layer aiming at giving the cable a specific colouring for identification purposes. Alternatively, the cable can be identified by a thin coloured strip which is applied externally.

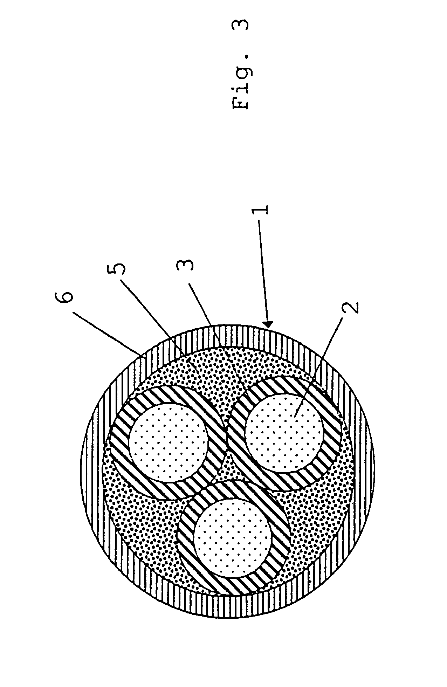

With reference to Figure 3, a self-extinguishing cable (1) of the tripolar type, in particular for the distribution of low voltage electric energy, comprises three conductors (2), each one coated with an insulating layer (3), two of which being the phase conductors, one being the neutral conductor. The insulating layers (3) may consist of an insulating polymer material selected from the ones above indicated. Alternatively, the insulating layers (3) may consist of a common flame retardant composition, or even of a flame retardant composition according to the present invention. The so insulated three conductors (2) are stranded together and the interstices among one conductor and the other are filled with a material (5), preferably having flame retardant properties as well, so as to form a continuous structure having a substantially cylindrical form. An external sheath (6) comprising the flame retardant composition according to the invention is then applied on such a structure.
Figures 1-3 show only one possible embodiment of a cable according to the invention. It is evident that suitable modifications known in the art can be made in this embodiment, but without going beyond the scope of the invention. In particular, the flame retardant compositions of the invention can also be advantageously used for coating telecommunications cables, that is for data transmission, including optical fibre cables, or even mixed energy/telecommunications cables.

The following examples illustrate the invention without limiting it.

### EXAMPLES

The compositions reported in the following table (examples 1-14) were prepared by inserting the various ingredients in a Pomini inner mixer of 1,2 1 volume. After bringing the temperature to 150° C and subsequent cooling, the mixer was emptied and the so obtained compositions were divided in small cubes having 3 mm diameter.

The resulting compositions were used for preparing the insulating layer of a copper conductor. This operation was carried out in an extruder having a cylinder of 45 mm diameter and a L/D (length/diameter) ratio of 25. The extruder has three warming/cooling zones along its body and one zone for its head. The head of the extruder was brought to a temperature of 150° C.

The compounds obtained with the examples of the following table were subject to the test based on standard IEC 332-1 (or CEI 20-35 or EN 50265 p.1 and p.2.1) adding the supplementary test of re-ignition which, substantially, consists in re-igniting the combustion soon after the possible self-extinguishment, by re-applying the flame by means of the same bunsen used for the above-mentioned test. The test of re-ignition was repeated five times, since it was deemed unlikely that a higher number of combustions could happen in reality, considering as positive the samples able to undergo more than five subsequent combustions by self-extinguishing.

The standard cable used for such a test had a copper conductor having a 1 mm diameter and was coated with a layer comprising the obtained various compositions (examples 1-14) having 0.7 mm thickness.

The test provides the application on the cable, for one minute, of the flame of a bunsen having a potency of 1 KW on the base of the vertically hanging cable. After the specified time has passed the Bunsen is removed and the possible self-extinguishment of the flame is detected.

After the possible self-extinguishment of the cable, the flame is re-ignited with the bunsen for about 10 seconds, repeating this operation for five times.

The values shown in the following table, at the entry "re-ignition", indicate the number of the re-ignitions (from 1 to 5) after which the self-extinguishment of the flame is detected, i.e. the number of the applications, after the first one, wherein the cable is self-extinguished.

For statistics purposes, the test was repeated five times, for each type of sample, and the single values shown in the table are actually the average of the values measured during the five tests.

As a further evidence of the properties of the cable of the invention, the composition of example 12 was also used in the test laid down by the standard IEC 332/3 category C, which provides carrying out the test on a vertically positioned bundle of cables.

The cables were cut in pieces of 3.5 m length, placed on a ladder and brought one near to the other until a space of 300 mm was occupied. The number of pieces was such that 1.5 1 per meter of the bundle of cables of combustible material was involved in the test. More than 400 cable pieces were necessary for the standard cable having a conductor with a 1 mm diameter and 0.7 mm insulating layer thickness. The cable pieces in excess, with respect to the ones positioned on the 300 mm, were mounted on subsequent layers till the needed number of cable pieces was mounted.

The ladder was vertically positioned in a booth specified by the standard IEC 332/3 and fire was ignited with a burner having 700.000 Btu/hour potency. The flame was maintained for 20 minutes and then extinguished. In order for the test to be considered as positive, the length of the burned section shall not be longer than 2 m: the cable coated with the composition of example 12 was burned for 1,3 m, thus resulting to be suitable.

| MATERIALS | CHARACTERISTICS | DENSITY | 1 cfr | 2 cfr | 3 cfr | 4 cfr | 5 cfr | 6 cfr | 7cfr |
|---|---|---|---|---|---|---|---|---|---|
| Escorene UL | EVA 19% MFI=0.7 | 0.950 | 100 | 100 | 100 | 100 | 100 | 100 | 100 |
| 00119 (phr) | (EXXON) | | | | | | | | |
| Melamine MP | melamine phosphate | 1.570 | 15 | | 15 | 15 | 7.5 | | |
| (phr) | (P:13.8%-N:37.5%)(DSM) | | | | | | | | |
| | melamine | | | | | | | | 15 |
| Zeolite 4A | zeolite 4A in | 1.000 | | | | 1,5 | 1.5 | 1.5 | 1.5 |
| (phr) | powder (CHEM PLAST) | | | | | | | | |
| Masteret 40470* | 68%P in EVA | 1.540 | | 15 | 15 | 15 | 7.5 | | |
| (phr) | (ITALMATCH) | | | | | | | | |
| Hydrofy G2.5 | magnesium hydroxide | 2.360 | 60 | 60 | | | | 60 | |
| (phr) | (Nuova Sima) | | | | | | | | |
| Density | | | 1.248 | 1.246 | 1.044 | 1.043 | 1.001 | 1.222 | 1.047 |
| (kg/dmc): | | | | | | | | | |
| Flame Test | | | 0/5 | 0/5 | 2/5 | 2/5 | 0/5 | 0/5 | 0/5 |
| (IEC 332/ 1) | | | | | | | | | |
| Re-ignition total fire | | | n.d. | n.d. | 1 | 1 | n.d. | n.d. | n.d. |
| (n°appl.) | | | | | | | | | |

| MATERIALS | CHARACTERISTICS | DENSITY | 8 cfr | 9 cfr | 10 cfr | 11 cfr | 12 | 13 | 14 |
|---|---|---|---|---|---|---|---|---|---|
| Escorene UL | EVA 19% MFI=0.7 | 0.950 | 100 | 100 | 100 | 100 | 100 | 100 | 100 |
| 00119 | (EXXON) | | | | | | | | |
| (phr) | | | | | | | | | |
| Melamine MP | melamine phosphate | 1.570 | | | 15 | 15 | 15 | 5 | 10 |
| (phr) | (P:13.8%-N:37.5%)(DSM) | | | | | | | | |
| Zeolite 4A | zeolite 4A in | 1.000 | | | | | 1.5 | 1.5 | 1.5 |
| (phr) | powder (CHEM PLAST) | | | | | | | | |
| Masteret 40470* | 68%P in EVA | 1.540 | | | 15 | 15 | 15 | 5 | 10 |
| (phr) | (ITALMATCH) | | | | | | | | |
| Hydrofy G2.5 | magnesium hydroxide | 2.360 | 60 | 90 | 60 | 90 | 60 | 60 | 60 |
| (phr) | (Nuova Sima) | | | | | | | | |
| Density | | | 1.222 | 1.325 | 1.267 | 1.352 | 1.264 | 1.237 | 1.251 |
| (kg/dmc): | | | | | | | | | |
| Flame Test | | | 0/5 | 0/5 | 5/5 | 5/5 | 5/5 | 5/5 | 5/5 |
| (IEC 332/ 1) | | | | | | | | | |
| Re-ignition total fire (n° appl.) | | | n.d. | n.d. | 3 | 3 | 5 | 5 | 5 |

| | | | | | | | | | |
|---|---|---|---|---|---|---|---|---|---|
| MFI = Melt Flow Index; n.d. = non detectable; cfr = comparison; *the reported values indicate the content of the phosphorus in phr. MFI = Melt Flow Index; n.d. = non detectable; cfr = comparison; the reported values indicate the content of the phosphorus in phr. | | | | | | | | | |

## Claims

1. A self-extinguishing cable comprising at least one conductor and at least a coating layer comprising a fire retardant composition comprising:
(a) a polymer base material;
(b) melamine or a derivative thereof, in amounts equal to 5-50 parts by weight;
(c) red phosphorus, in amounts equal to 5-50 parts by weight;
(d) magnesium and/or aluminium hydroxide or hydrated oxide, in amounts equal to 10-150 parts by weight;
(e) a zeolite in amounts equal to 1-5 parts by weight;
said amounts being referred to 100 parts by weight of component (a).

2. A cable according to claim 1, wherein the component (a) is selected from the group consisting of polyolefins, copolymers of olefins, copolymers of olefins with esters having ethylene insaturation, polyesters, polyethers, copolymers polyether/polyester, and mixtures thereof.

3. A cable according to claim 1 or 2, wherein component (a) is selected from the group consisting of high density polyethylene, medium density polyethylene, low density polyethylene; copolymers of ethylene with alpha-olefins having from 3 to 12 carbon atoms.

4. A cable according to anyone of the preceding claims, wherein component (a) is selected from the group consisting of polypropylene; thermoplastic copolymers of propylene with ethylene or another olefin; copolymers of ethylene with at least an ester selected from alkylacrylates, alkylmetacrylates and vinylcarboxylates, wherein the alkyl group, linear or branched, may have from 1 to 8 carbon atoms, whereas the carboxyl group, linear or branched, may have from 2 to 8 carbon atoms; elastomeric copolymers ethylene/alpha-olefins; and mixtures thereof.

5. A cable according to claim 4, wherein the copolymers of ethylene with at least one ester are selected from copolymers ethylene/vinylacetate, ethylene/ethylacrylate, ethylene/butylacrylate.

6. A cable according to anyone of the preceding claims, wherein the melamine derivative is selected from the group consisting of guanamines or melamine phosphates, borate, sulphate or cyanurate.

7. A cable according to anyone of the preceding claims, wherein the zeolite has the formula:
M_{x/n}[(AlO₂)ₓ,(SiO₂)_{y}]·wH₂O
wherein
M represents an alkali or earth-alkali metal cation or tetralkylammonium;
x, y and w are integer numbers, the y/x ratio being a number greater than or equal to 1;
n is the cation valence.

8. A cable according to anyone of the preceding claims, wherein components (b), (c), (d) and (e), are present in amounts equal to 10-30, 10-30, 20-100 and 1,5-3 parts by weight, respectively.

9. A fire retardant composition comprising a base polymer composition comprising:
(a) a polymer base material;
(b) melamine or a derivative thereof, in amounts equal to 5-50 parts by weight;
(c) red phosphorus, in amounts equal to 5-50 parts by weight;
(d) magnesium and/or aluminium hydroxide or hydrated oxide, in amounts equal to 10-150 parts by weight;
(e) a zeolite in amounts equal to 1-5 parts by weight; said amounts being referred to 100 parts by weight of component (a).

10. A composition according to claim 9, wherein component (a) is selected from the group consisting of polyolefins, copolymers of olefins, copolymers of olefins with esters having ethylene insaturation, polyesters, polyethers, copolymers polyether/polyester, and mixtures thereof.

11. A composition according to claim 10 or 11, wherein component (a) is selected from the group consisting of high density polyethylene, medium density polyethylene, low density polyethylene; copolymers of ethylene with alpha-olefins having from 3 to 12 carbon atoms.

12. A composition according to anyone of the claims from 9 to 11, wherein component (a) is selected from the group consisting of polypropylene; thermoplastic copolymers of propylene with ethylene or another olefin; copolymers of ethylene with at least an ester selected from alkylacrylates, alkylmetacrylates and vinylcarboxylates, wherein the alkyl group, linear or branched, has from 1 to 8 carbon atoms, whereas the carboxyl group, linear or branched, has from 2 to 8 carbon atoms; elastomeric copolymers ethylene/alpha-olefins; and mixtures thereof.

13. A composition according to anyone of claims from 9 to 12, wherein the copolymers of ethylene with at least one ester are selected from copolymers ethylene/vinylacetate, ethylene/ethylacrylate, ethylene/butylacrylate.

14. A composition according to anyone of claims from 9 to 13, wherein the melamine derivative is selected from the group consisting of guanamines or melamine phosphates, borate, sulphate or cyanurate.

15. A composition according to anyone of claims from 9 to 14, wherein the zeolite has the formula:
M_{x/n} [(AlO₂)ₓ,(SiO₂)_{y}]·wH₂O
wherein
M represents an alkali or earth-alkali metal cation or tetralkylammonium;
x, y and w are integer numbers, the y/x ratio being a number greater than or equal to 1;
n is the cation valence.

16. A composition according to anyone of claims from 9 to 15, wherein components (b), (c), (d) and (e), are present in amounts equal 10-30, 10-30, 20-100 and 1,5-3 parts by weight, respectively.

## Patentansprüche

1. Selbstauslöschendes Kabel, umfassend mindestens einen Leiter und mindestens eine Überzugsschicht, die eine feuerhemmende Zusammensetzung umfaßt, die folgendes umfaßt:
(a) ein Polymerbasismaterial;
(b) Melamin oder ein Derivat davon in Mengen gleich 5 bis 50 Gew.Teilen;
(c) roten Phosphor in Mengen gleich 5 bis 50 Gew.Teilen;
(d) Magnesium und/oder Aluminiumhydroxid oder hydratisiertes Oxid in Mengen gleich 10 bis 150 Gew.Teilen;
(e) Zeolith in Mengen gleich 1 bis 5 Gew.Teilen;
wobei die Mengen sich auf 100 Gew.Teile der Komponente (a) beziehen.

2. Kabel gemäß Anspruch 1, in dem die Komponente (a) ausgewählt ist aus der Gruppe bestehend aus Polyolefinen, Copolymeren von Olefinen, Copolymeren von Olefinen mit Estern mit Ethylenunsättigung, Polyestern, Polyethern, Polyether/Polyester-Copolymeren und Mischungen davon.

3. Kabel gemäß Anspruch 1 oder 2, in dem die Komponente (a) ausgewählt ist aus der Gruppe bestehend aus Polyethylen hoher Dichte, Polyethylen mittlerer Dichte, Polyethylen niedriger Dichte; Copolymeren von Ethylen mit alpha-Olefinen mit 3 bis 12 Kohlenstoffatomen.

4. Kabel gemäß mindestens einem der vorhergehenden Ansprüche, in dem die Komponente (a) ausgewählt ist aus der Gruppe bestehend aus Polypropylen; thermoplastischen Copolymeren von Propylen mit Ethylen oder einem anderen Olefin; Copolymeren von Ethylen mit mindestens einem Ester ausgewählt aus Alkylacrylaten, Alkylmethacrylaten und Vinylcarboxylaten, in dem die Alkylgruppe, linear oder verzweigt, 1 bis 8 Kohlenstoffatome haben kann, während die Carboxylgruppe, linear oder verzweigt, 2 bis 8 Kohlenstoffatome haben kann; elastomeren Ethylen/alpha-Olefinen-Copolymeren; sowie Mischungen davon.

5. Kabel gemäß Anspruch 4, in dem die Copolymere von Ethylen mit mindestens einem Ester ausgewählt sind aus Ethylen/Vinylacetat-, Ethylen/Ethylacrylat-, Ethylen/Butylacrylat-Copolymeren.

6. Kabel gemäß mindestens einem der vorhergehenden Ansprüche, in dem das Melaminderivat ausgewählt ist aus der Gruppe bestehend aus Guanaminen oder Melaminphosphaten, -borat, -sulfat oder -cyanurat.

7. Kabel gemäß mindestens einem der vorhergehenden Ansprüche, in dem der Zeolith die Formel hat:
M_{x/n}[(AlO₂)ₓ, (SiO₂)_{y}]·wH₂O
worin
M ein Alkali- oder Erdalkalimetallkation oder Tetraalkylammonium bezeichnet;
x, y und w ganze Zahlen sind, wobei das Verhältnis y/x eine Zahl größer als oder gleich 1 ist;
n die Kationenwertigkeit ist.

8. Kabel gemäß mindestens einem der vorhergehenden Ansprüche, in dem die Komponenten (b), (c), (d) und (e) in Mengen gleich 10-30, 10-30, 20-100 bzw. 1,5-3 Gew.Teilen vorliegen.

9. Basispolymerzusammensetzung umfassende feuerhemmende Zusammensetzung, die folgendes umfaßt:
(a) ein Polymerbasismaterial;
(b) Melamin oder ein Derivat davon in Mengen gleich 5 bis 50 Gew.Teilen;
(c) roten Phosphor in Mengen gleich 5 bis 50 Gew.Teilen;
(d) Magnesium und/oder Aluminiumhydroxid oder hydratisiertes Oxid in Mengen gleich 10 bis 150 Gew.Teilen;
(e) Zeolith in Mengen gleich 1 bis 5 Gew.Teilen;
wobei die Mengen sich auf 100 Gew.Teile der Komponente (a) beziehen.

10. Zusammensetzung gemäß Anspruch 9, in der die Komponente (a) ausgewählt ist aus der Gruppe bestehend aus Polyolefinen, Copolymeren von Olefinen, Copolymeren von Olefinen mit Estern mit Ethylenunsättigung, Polyestern, Polyethern, Polyether/Polyester-Copolymeren und Mischungen davon.

11. Zusammensetzung gemäß Anspruch 10 oder 11, in der die Komponente (a) ausgewählt ist aus der Gruppe bestehend aus Polyethylen hoher Dichte, Polyethylen mittlerer Dichte, Polyethylen niedriger Dichte; Copolymeren von Ethylen mit alpha-Olefinen mit 3 bis 12 Kohlenstoffatomen.

12. Zusammensetzung gemäß mindestens einem der Ansprüche 9 bis 11, in der die Komponente (a) ausgewählt ist aus der Gruppe bestehend aus Polypropylen; thermoplastischen Copolymeren von Propylen mit Ethylen oder einem anderen Olefin; Copolymeren von Ethylen mit mindestens einem Ester ausgewählt aus Alkylacrylaten, Alkylmethacrylaten und Vinylcarboxylaten, in dem die Alkylgruppe, linear oder verzweigt, 1 bis 8 Kohlenstoffatome hat, wohingegen die Carboxylgruppe, linear oder verzweigt, 2 bis 8 Kohlenstoffatome hat; elastomeren Ethylen/alpha-Olefin-Copolymeren; und Mischungen davon.

13. Zusammensetzung gemäß mindestens einem der Ansprüche 9 bis 12, in der die Copolymere von Ethylen mit mindestens einem Ester ausgewählt sind aus Ethylen/Vinylacetat-, Ethylen/Ethylacrylat-, Ethylen/Butylacrylat-Copolymeren.

14. Zusammensetzung gemäß mindestens einem der Ansprüche 9 bis 13, in der das Melaminderivat ausgewählt ist aus der Gruppe bestehend aus Guanaminen oder Melaminphosphaten, -borat, -sulfat oder -cyanurat.

15. Zusammensetzung gemäß mindestens einem der Ansprüche 9 bis 14, in der der Zeolith die Formel hat:
M_{x/n}[(AlO₂)ₓ, (SiO₂)_{y}]·wH₂O
worin
M ein Alkali- oder Erdalkalimetallkation oder Tetraalkylammonium bezeichnet;
x, y und w ganze Zahlen sind, wobei das Verhältnis y/x eine Zahl größer als oder gleich 1 ist;
n die Kationenwertigkeit ist.

16. Zusammensetzung gemäß mindestens einem der Ansprüche 9 bis 15, in der die Komponenten (b), (c), (d) und (e) in Mengen gleich 10-30, 10-30, 20-100 bzw. 1,5-3 Gew.Teilen vorliegen.

## Revendications

1. Câble auto-extinguible, comportant au moins un conducteur et au moins une couche de revêtement comprenant une composition ignifuge qui comprend :
a) un matériau polymère de base,
b) de la mélamine ou de l'un de ses dérivés, en une quantité de 5 à 50 parties en poids,
c) du phosphore rouge, en une quantité de 5 à 50 parties en poids,
d) un hydroxyde ou un oxyde hydraté de magnésium et/ou d'aluminium, en une quantité de 10 à 150 parties en poids,
e) et une zéolite, en une quantité de 1 à 5 parties en poids,
les quantités indiquées étant rapportées à 100 parties en poids de composant (a).

2. Câble conforme à la revendication 1, dans lequel le composant (a) est choisi dans l'ensemble constitué par les polyoléfines, copolymères d'oléfines, copolymères d'oléfines et d'esters à insaturation éthylénique, polyesters, polyéthers et copolymères polyester/polyéther, ainsi que leurs mélanges.

3. Câble conforme à la revendication 1 ou 2, dans lequel le composant (a) est choisi dans l'ensemble formé par le polyéthylène haute densité, le polyéthylène moyenne densité, le polyéthylène basse densité et les copolymères d'éthylène et d'α-oléfine en C₃₋₁₂.

4. Câble conforme à l'une des revendications précédentes, dans lequel le composant (a) est choisi dans l'ensemble formé par le polypropylène, les copolymères thermoplastiques de propylène et d'éthylène ou d'une autre oléfine, les copolymères d'éthylène et d'au moins un ester choisi parmi les acrylates d'alkyle, méthacrylates d'alkyle et carboxylates de vinyle dont les groupes alkyle peuvent être linéaires ou ramifiés et comporter 1 à 8 atomes de carbone et les groupes carboxylate peuvent être linéaires ou ramifiés et comporter 2 à 8 atomes de carbone, et les copolymères élastomères d'éthylène et d'α-oléfine, ainsi que leurs mélanges.

5. Câble conforme à la revendication 4, pour lequel les copolymères d'éthylène et d'au moins un ester sont choisis parmi les copolymères poly-(éthylène/acétate de vinyle), poly(éthylène/acrylate d'éthyle) et poly(éthylène/acrylate de butyle).

6. Câble conforme à l'une des revendications précédentes, dans lequel le dérivé de mélamine est choisi dans l'ensemble formé par les phosphates, borates, sulfates et cyanurates de guanamine ou de mélamine.

7. Câble conforme à l'une des revendications précédentes, dans lequel la zéolite a pour formule :
M_{x/n}[(AlO₂)_{x,}(SiO₂)_{y}]·wH₂O
dans laquelle
M représente un cation de métal alcalin ou alcalino-terreux ou un cation tétraalkylammonium,
x, y et w représentent des nombres entiers, le rapport y/x étant un nombre supérieur ou égal à 1,
et n représente la valence du cation.

8. Câble conforme à l'une des revendications précédentes, dans lequel les composants (b), (c), (d) et (e) se trouvent respectivement en les quantités de 10 à 30 parties en poids, 10 à 30 parties en poids, 20 à 100 parties en poids, et 1,5 à 3 parties en poids.

9. Composition ignifuge, comprenant une composition à base de polymère qui comprend :
a) un matériau polymère de base,
b) de la mélamine ou de l'un de ses dérivés, en une quantité de 5 à 50 parties en poids,
c) du phosphore rouge, en une quantité de 5 à 50 parties en poids,
d) un hydroxyde ou un oxyde hydraté de magnésium et/ou d'aluminium, en une quantité de 10 à 150 parties en poids,
e) et une zéolite, en une quantité de 1 à 5 parties en poids,
les quantités indiquées étant rapportées à 100 parties en poids de composant (a).

10. Composition conforme à la revendication 9, dans laquelle le composant (a) est choisi dans l'ensemble constitué par les polyoléfines, copolymères d'oléfines, copolymères d'oléfines et d'esters à insaturation éthylénique, polyesters, polyéthers et copolymères polyester/polyéther, ainsi que leurs mélanges.

11. Composition conforme à la revendication 10 ou 11, dans laquelle le composant (a) est choisi dans l'ensemble formé par le polyéthylène haute densité, le polyéthylène moyenne densité, le polyéthylène basse densité et les copolymères d'éthylène et d'α-oléfine en C₃₋₁₂.

12. Composition conforme à l'une des revendications 9 à 11, dans laquelle le composant (a) est choisi dans l'ensemble formé par le polypropylène, les copolymères thermoplastiques de propylène et d'éthylène ou d'une autre oléfine, les copolymères d'éthylène et d'au moins un ester choisi parmi les acrylates d'alkyle, méthacrylates d'alkyle et carboxylates de vinyle dont les groupes alkyle peuvent être linéaires ou ramifiés et comporter 1 à 8 atomes de carbone et les groupes carboxylate peuvent être linéaires ou ramifiés et comporter 2 à 8 atomes de carbone, et les copolymères élastomères d'éthylène et d'α-oléfine, ainsi que leurs mélanges.

13. Composition conforme à l'une des revendications 9 à 12, pour laquelle les copolymères d'éthylène et d'au moins un ester sont choisis parmi les copolymères poly(éthylène/acétate de vinyle), poly(éthylène/acrylate d'éthyle) et poly(éthylène/acrylate de butyle).

14. Composition conforme à l'une des revendications 9 à 13, dans laquelle le dérivé de mélamine est choisi dans l'ensemble formé par les phosphates, borates, sulfates et cyanurates de guanamine ou de mélamine.

15. Composition conforme à l'une des revendications 9 à 14, dans laquelle la zéolite a pour formule :
M_{x/n}[(AlO₂)ₓ,(SiO₂)_{y}]·wH₂O
dans laquelle
M représente un cation de métal alcalin ou alcalino-terreux ou un cation tétraalkylammonium,
x, y et w représentent des nombres entiers, le rapport y/x étant un nombre supérieur ou égal à 1,
et n représente la valence du cation.

16. Composition conforme à l'une des revendications 9 à 15, dans laquelle les composants (b), (c), (d) et (e) se trouvent respectivement en les quantités de 10 à 30 parties en poids, 10 à 30 parties en poids, 20 à 100 parties en poids, et 1,5 à 3 parties en poids.
